(19) Europäisches Patentamt
European Patent Office
Office européen des brevets

(11) Veröffentlichungsnummer: **0 449 072 B1**

(12) **EUROPÄISCHE PATENTSCHRIFT**

(45) Veröffentlichungstag der Patentschrift: **04.01.95**

(51) Int. Cl.[6]: **C09D 5/44**, C08G 59/50, C08L 63/00

(21) Anmeldenummer: **91104142.4**

(22) Anmeldetag: **18.03.91**

# (54) Verfahren zur Herstellung von kationischen Lackbindemitteln und deren Verwendung.

(30) Priorität: **22.03.90 AT 674/90**

(43) Veröffentlichungstag der Anmeldung:
**02.10.91 Patentblatt 91/40**

(45) Bekanntmachung des Hinweises auf die Patenterteilung:
**04.01.95 Patentblatt 95/01**

(84) Benannte Vertragsstaaten:
**DE FR GB IT**

(56) Entgegenhaltungen:
**EP-A- 0 296 450**
**GB-A- 2 065 126**

(73) Patentinhaber: **Vianova Kunstharz Aktiengesellschaft**
**Bundesstrasse 175**
**A-8402 Werndorf (AT)**

(72) Erfinder: **Schipfer, Rudolf, Dr.**
**Ernst Haeckelstrasse 53**
**A-8010 Graz (AT)**
Erfinder: **Schmölzer, Gerhard, Dr.**
**Eisteichgasse 37**
**A-8010 Graz (AT)**

EP 0 449 072 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von kationischen Lackbindemitteln auf Basis von modifizierten Epoxidharz-Amin-Addukten sowie die nach diesem Verfahren hergestellten Bindemittel und ihre Verwendung in Kombination mit Vernetzungskomponenten in kathodisch abscheidbaren Elektrotauchlacken.

An Bindemittel für die Elektrotauchlackierung werden sehr hohe Anforderungen gestellt. Nicht nur die Lackherstellung, die Badführung und die elektrische Abscheidung müssen sich ohne Schwierigkeiten realisieren lassen, auch von den Filmeigenschaften, wie Oberflächenbeschaffenheit, Umgriff, Korrosionsfestigkeit und Steinschlagbeständigkeit im Zusammenhang mit der Haftung zum Substrat und zu Folgeschichten wird ein sehr hohes Eigenschaftsprofil verlangt.

Zur Erreichung eines günstigen Verdünnungsverhaltens der Lacke beim Nachsetzen in die Elektrotauchanlage sollen die Bindemittel eine niedrige Viskosität aufweisen. Andererseits ist ein hohes Molekulargewicht eine der Voraussetzungen zur Erzielung guter Beständigkeitseigenschaften der vernetzten Filme, was jedoch üblicherweise mit einer hohen Viskosität des Bindemittels verbunden ist.

Ähnlich gegensätzliche Forderungen bestehen hinsichtlich der Ausbildung eines hohen elektrischen Filmwiderstandes bei der Abscheidung zur Erzielung eines guten Umgriffs und dem gleichzeitigen Wunsch nach hohen Filmschichtstärken mit exzellenter Flächenqualität.

Aus der Literatur sind viele Wege bekannt, einen Kompromiß zwischen einem Optimum der Abscheidungscharakteristik und den Eigenschaften der vernetzten Lackfilme durch mannigfache Modifizierung von Bisphenol A-Epoxidharz-Amin-Addukten oder pßenolnovolak-Epoxidharz-Amin-Addukten zu finden.

So wird beispielsweise in der EP-A2- 0355654 mit einem Polyhydroxydiamin als Modifikator eine hochmolekulare oxiranfunktionelle Struktureinheit mit niedriger Glasübergangstemperatur beschrieben, die es gestattet, die Eigenschaften wie Löslichkeitsverhalten, Umgriff, Schichtaufbau und Filmverlauf zu optimieren.

Besonders gute Ergebnisse im Hinblick auf ihre Korrosionsschutzeigenschaften liefern die in der EP-A2-0218812 bzw. in der EP-B1- 0209857 beschriebenen Urethan- oder Harstoffgruppen tragenden Produkte. Durch den Einbau dieser Urethan- bzw. Harnstoffgruppen wird im allgemeinen eine Erhöhung der Glasübergangstemperaturen der Bindemittel bewirkt. Dies hat jedoch eine Verschlechterung des Filmverlaufes und eine Verringerung der maximal erzielbaren Schichtstärken zur Folge. Zur Erzielung hoher Filmschichten und exzellenter Flächenqualitäten müssen daher an derartigen Bindemittelsystemen Modifikationen zur Flexibilisierung der Polymerstruktur vorgenommen werden, wodurch in den meisten Fällen wieder eine Reduzierung der Beständigkeitseigenschaften der eingebrannten Filme, insbesonders an den Kanten der Werkstükke. und eine Verminderung der Foleeschichthaftung bewirkt wird. Die positiven Eigenschaften dieser Bindemittel, also ihre ausgezeichnete Korrosionsbeständigkeit und Steinschlagfestigkeit im Zusammenhang mit der guten Haftung zu Folgeschichten, können daher nur zum Teil genutzt werden.

Aus der Literatur sind viele Methoden zur Plastifizierung kathodisch abscheidbarer Grundierungen bekannt (siehe beispielsweise AT-PS 381.115, US-PS- 4,104,147, EP-A2-074634). Modifikationen mit steigendem Plastifizierungsgrad ergeben, neben den bereits genannten, jedoch weitere Nachteile, wie eine Abnahme des Naßfilmwiderstandes und eine Verschlechterung im Umgriffsverhalten.

Es wurde nun überraschenderweise gefunden, daß eine optimale Anpassung der Bindemittel auf Basis von Epoxidharz-Amin-Addukten an die Erfordernisse in der Praxis durch den Einbau von Oxazolidonstrukturen in Kombination mit spezifisch aufgebauten Diaminbrücken möglich ist.

Die Bildung von Oxazolidon-Strukturen bei der Reaktion von Isocyanaten mit Epoxidverbindungen ist durch M.E. DYER und D. SWERN, Chem. Rev.,67, 197 (1967) oder J.E. HERWEH und W.J. KAUFMANN, Tetrahedron Letters No 12, pp. 809-812, Pergamon Press, GB (1971) bekannt und erfolgt nach dem Schema

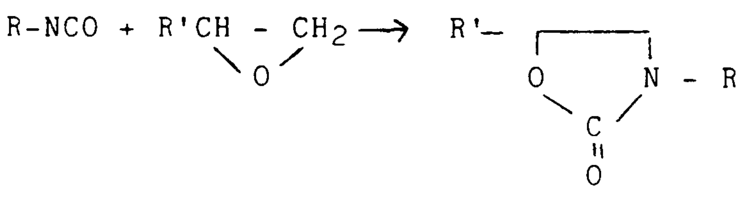

N-substituiertes 2-Oxazolidon

Wie von P.I. KORDOMENOS, K.C. FRISCH und J.E. KRESTA, J.Coatings Tech., Vol 55, No. 700, pp 49-61 (1983) beschrieben wird, können Polyoxazolidone min endständigen Epoxidgruppen in Kombination mit üblichen Epoxidharzhärtern auch als Überzugsmittel eingesetzt werden. Die Reaktion ermöglicht auch die Herstellung von Polyoxazolidon-isocyanaten und von entsprechenden Präpolymeren, die in üblicher Weise vernetzt werden können. Die Beschichtungen zeigen eine gute Härte, sowie Lösungsmittel- und Wärmebeständigkeit.

Die Erfindung betrifft demgemäß ein Verfahren zur Herstellung von kationischen Lackbindemitteln auf der Basis von modifizierten Epoxidharz-Amin-Addukten, welches dadurch gekennzeichnet ist, daß man

(A) 60 bis 80 Gew.-% , vorzugsweise 65 bis 75 Gew.-%, einer Epoxidharzkomponente, bestehend aus

(Aa) 60 bis 98 Gew.-%, vorzugsweise 80 bis 97 Gew.%, mindestens eines aromatischen und/oder aliphatischen Diepoxidharzes mit einem Epoxidäquivalentgewicht zwischen 190 und 500,

und

(Ab) 2 bis 40 Gew.-%, vorzugsweise 3 bis 20 Gew.-%, mindestens einer durch N-substituierte Mono- und/oder Bis-2-oxazolidon-Gruppierungen, wie sie durch die Reaktion von Glycidylgruppen mit Isocyanatgruppen erhalten werden, modifizierten Epoxidverbindung der allgemeinen Formel

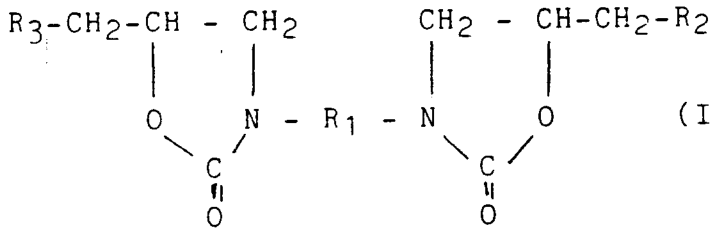

(I)

oder

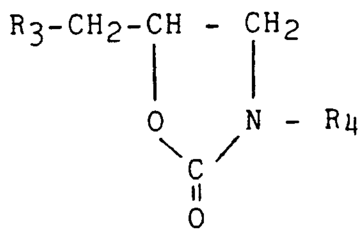

(II)

wobei

- $R_1$ den verbleibenden Rest eines (cyclo)aliphatischen oder eines aromatischen Diisocyanats,
- $R_2$ den verbleibenden Rest eines aliphatischen Monoglycidylethers oder eines aliphatischen Monoglycidylesters oder einen Rest $R_3$,
- $R_3$ den verbleibenden Rest eines (aromatisch-)aliphatischen oder aromatischen Diglycidylethers,

und

- $R_4$ den verbleibenden Rest eines (cyclo)aliphatischen oder eines aromatischen Monoisocyanats darstellt,

mit

(B) 20 bis 40 Gew.-%, vorzugsweise 25 bis 35 Gew.-%, einer Aminkomponente, bestehend aus

(Ba) 0 bis 20 Aminäquivalent-%, vorzugsweise 0 bis 15 Aminäquivalent-%, mindestens eines primären Alkylamins und/oder Alkanolamins,

(Bb) 25 bis 55 Aminäquivalent-%, vorzugsweise 35 bis 50 Aminäquivalent-%, mindestens eines sekundären Alkylamins und/oder Alkanolamins,

(Bc) 20 bis 50 Aminäquivalent-%, vorzugsweise 25 bis 45 Aminäquivalent-%, mindestens eines prim.-tert. Alkyldiamins, und

(Bd) 5 bis 25 Aminäquivalent-%, vorzugsweise 10 bis 20 Aminäquivalent-%, einer disekundären Aminverbindung aus 2 Mol einer als Reaktionsprodukt von diprimären Di- oder Polyaminen mit aliphatischen Monoglycidyl- und/oder Monoepoxidverbindungen resultierenden Verbindung mit einem Mol einer Diepoxidverbindung,

wobei die Summen der Prozentzahlen der Komponenten A und B bzw. der Komponenten (Aa) und (Ab) bzw. der Komponenten (Ba), (Bb), (Bc) und (Bd) jeweils 100 ergeben müssen, zu einem epoxidgruppenfreien Addukt mit einem Molekulargewicht von 2000 - 18.000 (Gewichtsmittel), einer Glasübergangstemperatur zwischen +20 und +45 °C und einer Basizität entsprechend einer Aminzahl von mind, 20 mg KOH/g umsetzt, mit der Maßgabe, daß die Epoxidharzkomponenten (Aa) und (Ab) mit den Aminkomponenten (Ba), (Bb), (Bc) und (Bd) bei 60 bis 80 °C in 55-75%iger Anlösung in Glykolethern reagiert werden, wobei die Reaktion mit der Aminkomponente (Bc) vorzugsweise zuletzt durchgeführt wird, und daß man zur Vervollständigung der Reaktion die Reaktionstemperatur nach Ende aller Zugaben auf maximal 120 °C erhöht.

Die Erfindung betrifft weiters die nach diesem Verfahren hergestellten kationischen Lackbindemittel, sowie ihre Verwendung in Kombination mit Vernetzungskomponenten in kathodisch abscheidbaren Elektrotauchlacken.

Durch die erfindungsgemäßen Modifikationen werden einerseits Oxazolidonsegmente eingeführt, die bei niedrigem Molekulargewicht hohe Glasübergangstemperaturen aufweisen; andererseits haben die Diaminmodifikatoren (Bd) ein hohes Molekulargewicht bei niedriger Glasübergangstemperatur. Aufgrund dieser Kombination weisen die erfindungsgemäßen Elektrotauchlacke ausgezeichnete elektrische Eigenschaften, wie einen hohen Naßfilmwiderstand bei gutem Filmaufbau und damit ein exzellentes Umgriffsverhalten auf. Die vernetzten Lackfilme haben sehr gute Beständigkeitseigenschaften, vor allem einen ausgezeichneten Korrosionsschutz an den Kanten der Werkstücke.

Als Ausgangsmaterialien für die erfindungsgemäß hergestellten Bindemittel dienen als Komponente (Aa) aromatische oder aliphatische Diepoxidharze, z. B. auf Basis von Diphenolen bzw. von Polyalkylenglykolen, wie sie in der einschlägigen Literatur für die Herstellung von Epoxidharz-Amin-Addukten, die als Bindemittel für kationische Lackbindemittel dienen, beschrieben und von verschiedenen Herstellern angeboten werden. Zu dieser Gruppe zählen auch die in verschiedener Weise durch Kettenverlängerung modifizierten Produkte. Die erfindungsgemäß eingesetzten Diepoxidverbindungen weisen Epoxidäquivalentgewichte zwischen 190 und 500 auf.

Als Epoxidharzkomponente (Ab) werden Mono- oder Diepoxidverbindungen eingesetzt, die durch N-substituierte Mono- oder Bis-2-oxazolidon-Gruppierungen, wie sie durch die Reaktion von Glycidylgruppen mit Isocyanatgruppen erhalten werden, modifiziert sind, und die durch folgende allgemeine Formeln definiert werden können:

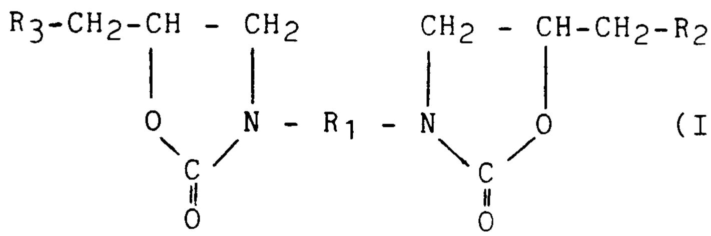

(I)

oder

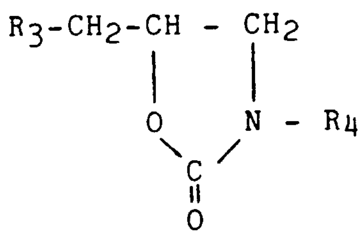

(II)

wobei

- $R_1$ den verbleibenden Rest eines (cyclo)aliphatischen oder eines aromatischen Diisocyanats,
- $R_2$ den verbleibenden Rest eines aliphatischen Monoglycidylethers oder eines aliphatischen Monoglycidylesters oder einen Rest $R_3$,
- $R_3$ den verbleibenden Rest eines (aromatisch)aliphatischenoder aromatischen Diglycidylethers, und
- $R_4$ den verbleibenden Rest eines (cyclo)aliphatischen oder eines aromatischen Monoisocyanats

darstellt.

Zur Reaktion gelangende Glycidylgruppen, wie sie in den Formeln (I) und (II) durch den Rest $R_3$ definiert werden, stammen von Diepoxidverbindungen. Im wesentlichen handelt es sich dabei um handelsübliche Produkte von Typ des Bisphenol A oder F, um aliphatische Diepoxidverbindungen auf Polyalkylenglykolbasis oder um aromatisch-aliphatische Diepoxidverbindungen, z. B. auf Basis eines polyoxypropylenglykolmodifizierten Bisphenol A.

Die durch einen Rest $R_2$ in der Formel (I) gekennzeichneten Monoglycidylverbindungen werden als monofunktionelle Verbindungen, ebenso wie die Verbindungen der Formel (II), vorzugsweise nur in Kombination mit den entsprechenden difunktionellen Verbindungen (Formel (I), $R_2 = R_3$) eingesetzt.

Als Monoglycidylverbindungen kommen hierbei die Monoepoxidverbindungen mit einem aliphatischen Rest von 8 bis 20 C-Atomen, wie Alkylglycidylether bzw.-ester, sowie insbesonders die bekannten Glycidylester der KOCH-Säuren zum Einsatz.

Als Diisocyanate, deren verbleibender Rest in der Formel (I) durch $R_1$ ausgedrückt ist, können die bekannten aliphatischen, cycloaliphatischen und aromatischen Diisocyanate eingesetzt werden. Als Beispiele sind hier Hexamethylendiisocyanat, Trimethylhexamethylendiisocyanat, Isophorondiisocyanat, Toluylendiisocyanat (z. B. als handelsübliches Isomerengemisch mit einem 80 %-Anteil des 2,4-Isomeren), Diphenylmethandiisocyanat oder meta-Tetramethylxylylendiisocyanat genannt.

Als Monoisocyanate (Rest $R_4$ in der Formel (II)) werden (cyclo)aliphatische Monoisocyanate, wie Octadecylmonoisocyanat, oder Phenylisocyanate eingesetzt.

Für die Herstellung der Komponente (Ab) werden die Epoxidharze vor der Umsetzung, z. B. durch azeotrope Destiltation mit einem Schleppmittel, entwässert, anschließend in einem reaktionsinerten Lösungsmittel gelöst und mit 0,5 bis 5 Mol-%, bezogen auf zu reagierende Isocyanatgruppen, Lithiumbromid als Katalysator versetzt. Bei Reaktionstemperaturen von 90 bis 160 °C werden die Isocyanatverbindungen mit den Glycidylverbindungen reagiert. Die Kontrolle des Reaktionsverlaufes erfolgt anhand der Abnahme des Gehalts an NCO-Gruppen und der synchronen Abnahme des Gehalts an Oxirangruppen. Die erhaltenen Produkte weisen im IR-Spektrum eine für die Carbonylschwingung der Oxazolidongruppierung typische Absorption bei einer Wellenzahl von 1720 - 1760 $cm^{-1}$ auf.

Bei der weiteren Umsetzung mit den Aminen der Komponente (B) werden die Komponenten (Aa) und (Ab) in einem Verhältnis von 60 bis 98 Gew.-%, vorzugsweise 80 bis 97 Gew.-%, Komponente (Aa) und 2 bis 40 Gew.-%, vorzugsweise 3 bis 20 Gew.-%, Komponente (Ab) eingesetzt.

Die Komponenten (A) und (B) werden in einem Verhältnis von 60 bis 80 Gew.-%, vorzugsweise 65 bis 75 Gew.-%, Komponente (A) und 20 bis 40 Gew.-%, vorzugsweise 25 bis 35 Gew.-%, Komponente (B) zu einem epoxidgruppenfreien Addukt umgesetzt.

Die Amine der Gruppe (Ba) mit einem Anteil von 0 bis 20 Aminäquivalent-%, vorzugsweise 0 bis 15 Aminäqulvalent-%, an der Komponente (B), sowie die Amine der Gruppe (Bb) mit einem Anteil von 25 bis 55 Aminäquivalent-%, vorzugsweise 35 bis 50 Aminäquivalent-%, an der Komponente (B) und die Amine der Gruppe (Bd) mit einem Anteil mit 5 bis 25 Aminäquivalent-%, vorzugsweise 10 bis 20 Aminäquivalent-%, an der Komponente (B) werden in einer ersten Reaktionsstufe bei 60 °C bis 80 °C mit der Epoxidharzkomponente A, bestehend aus (Aa) und (Ab),in 55 - 75%iger Anlösung in Glykolethern bis zum vollständigen Umsatz der NH-Funktionalität reagiert. Zur Verfolgung des Reaktionsverlaufs bedient man sich der Methode zur Bestimmung der Summe an basischen Stickstoffatomen und freien Oxirangruppen (EPA-Wert).

Die in diesem Reaktionsschritt verbleibenden freien Epoxidgruppen werden nachfolgend mit den Aminen der Gruppe (Bc), die mit 20 bis 50 Aminäquivalent-%, vorzugsweise 25 bis 45 Aminäquivalent-%, in der Komponente (B) enthalten sind, vorteilhafterweise in einer zweiten Reaktionsstufe bei 60 °C umgesetzt. Anschließend wird die Reaktion bei 100 - 120 °C bis zum vollständigen Umsatz aller Oxirangruppen geführt.

Als Amine der Gruppe (Ba) werden primäre Alkylamine, wie n-Butylamin, n-Hexylamin, Octylamin, Mono-2-ethyl-hexylamin, $C_{10}$-$C_{18}$-Alkylamine, Fettamine und/oder primäre Alkanolamine, wie Monoethanolamin, 1-Amino-2-propanol, 2-Aminobutanol-1, 2-Amino-2-ethylpropandiol-1,3, 2-(2-Hydroxyethoxy)ethylamin-1, eingesetzt.

Die Gruppe (Bb) umfaßt sekundäre Alkylamine, wie Diethylamin, Di-n-propylamin, Di-n-butylamin, Di-isopropylamin, Di-isobutylamin, Di-cyclohexylamin, Di-2-ethylhexylamin, Morpholin, und/oder sekundäre Alkanolamine, wie Diethanolamin, Diisopropanolamin, n-Butyl-ethanolamin, Cyclohexylethanolamin, 2-(N-Methylamino)-ethanol.

Zur Gruppe (Bc) zählen primär-tertiäre Alkyldiamine, wie 1-Amino-3-dimethylaminopropan (N,N-Dimethylaminopropylamin), 1-Amino-3-diethylaminopropan (N,N-Diethylaminopropylamin) und 1-Diethylamino-4-aminopentan.

Die Amine der Gruppe (Bd) sind disekundäre Aminverbindungen, die durch Umsetzung von diprimären aliphatischen Di- oder Polyaminen mit aliphatischen Monoglycidyl- und/oder Monoepoxidverbindungen erhalten werden. Diese können in einer weiteren Reaktion in einem Verhältnis von 2 Mol Aminverbindung zu 1 Mol einer Diepoxidverbindung zu disekundären Polyaminopolyolen aufgebaut werden. Produkte dieser Art sind in der EP-A2-0355654 ausführlich beschrieben. Für das erfindungsgemäße Verfahren werden vorzugsweise Verbindungen eingesetzt, die ein Reaktionsprodukt aus 1 Mol Diethylentriamin und 3,1 Mol Ethylhexylglycidylether darstellen.

In einer weiteren bevorzugten Form werden Verbindungen eingesetzt, die ein Reaktionsprodukt aus 2 Mol einer disekundären Aminverbindung, bestehend aus 1 Mol Diethylentriamin und 3,1 Mol Ethylhexylglycidylether, mit 1 Mol eines Bisphenol A-Epoxidharzes (EEW 190) darstellen.

Die in Komponente (B) verwendeten Amine verleihen dem Endprodukt nach Protonierung die notwendige Wasserverdünnbarkeit und führen in der Reaktion mit Komponente A unter gleichzeitiger Molekülvergrößerung zu den für die Endprodukte charakteristischen Molekulargewichtsverteilungen.

Die erfindungsgemäß hergestellten Epoxidharz-Amin-Addukte weisen ein Molekulargewicht von 2000 bis 18.000 (Gewichtsmittel) bzw. von 1500 bis 3.000 (Zahlenmittel) auf. Ihre Glasübergangstemperatur liegt zwischen +20 und +45 °C. Zur einwandfreien Löslichkeit nach Protonierung ist eine Basizität entsprechend einer Aminzahl von mind. 20 mg KOH/g nötig, was bei der Formulierung des Harzansatzes zu berücksichtigen ist.

Im Anschluß an die Reaktion kann gegebenenfalls das organische Lösemittel unter Vakuum anteilig entfernt werden. Diese Verfahrensstufe kann auch erst nach partieller Neutralisation des Ansatzes und nach dem Verdünnen mit Wasser erfolgen. Bei dieser Verfahrensvariante werden Materialien erhalten, welche nur geringe Anteile an organischen Lösemitteln haben und damit auch strengen Umweltvorschriften, z. B. den Low-VOC-Regulations der USA, entsprechen.

Zur Neutralisation sind für die nach dem erfindungsgemäßen Verfahren hergestellten Produkte Säuremengen von 20 bis 45 mMol/100 g Bindemittel (Festharz) erforderlich, um eine für die Praxis der Elektrotauchlackierung geeignete stabile und sedimentationsfreie wäßrige Lösung oder Emulsion zu erhalten. Die erfindungsgemäßen Produkte zeigen, bedingt durch ihren Aufbau, eine ausgezeichnete Dispergierbarkeit. Durch den niedrigen Neutralisationsgrad werden die Verarbeitbarkeit und die elektrischen Eigenschaften der Bindemittel günstig beeinflußt.

Die nach dem erfindungsgemäßen Verfahren hergestellten Bindemittel werden in Kombination mit Vernetzungskomponenten verwendet. Dazu können Produkte, die durch Umesterungsreaktionen zur Vernetzung führen und die beispielsweise in der EP-B1- 0012463, DE-A1-33 15 469, AT-PS 372,099 und AT-PS 379,602 beschrieben sind, eingesetzt werden. Ebenso kann auch eine Vernetzung durch blockierte Isocyanate oder Aminoharze, gegebenenfalls unter Verwendung entsprechender Katalysatoren, zur Härtung herangezogen werden. Die Einbrenntemperaturen für die abgeschiedenen Filme liegen je nach dem eingesetzten Härtungssystem zwischen 140 und 190 °C.

Die Herstellung des Badmaterials für die Elektrotauchlackierung, die Pigmentierung, der Neutralisations- und Verdünnungsvorgang sind dem Fachmann bekannt und bedürfen keiner näheren Beschreibung. Dies gilt auch für die Beschichtung und die Härtung der abgeschiedenen Filme.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Abkürzungen werden in den Beispielen verwendet:

| | |
|---|---|
| MP | Methoxypropanol |
| EP | Ethoxypropanol |
| CE | Versaticsäureglycidylester Cardura ® E (Shell) |
| EEW 475 | Epoxidharz auf Basis Bisphenol A-Diglycidylether mit einem Epoxidharzäquivalentgewicht von 475 (Epikote ® 1001, Shell), 75%ig in MP, |
| EEW 190 | Epoxidharz auf Basis Bisphenol A-Diglycidylether mit einem Epoxidäquivalentgewicht von 190 (Epon ® 828 , Shell) |
| EEW 200 | Epoxidharz auf Basis eines polyoxypropylenglykolmodifizierten Diglycidylethers mit einem Epoxidäquivalentgewicht von 200 (DER ® 732 , Dow Chemical) |
| EEW 320 | Epoxidharz auf Basis eines polyoxypropylenglykolmodifizierten Diglycidylethers mit einem Epoxidäquivalentgewicht von 320 (DER ® 736 , Dow Chemical) |
| EEW 350 | Epoxidharz auf Basis eines polyoxypropylglykolmodifizierten Bisphenol A-Diglycidylethers mit einem Epoxidäquivalentgewicht von 350, (BPP 350 , Sanyo Chemical) |
| TDI | Toluylendiisocyanat 80/20 (handelsübliches Isomerengemisch) |
| IPDI | Isophorondiisocyanat |

| | |
|---|---|
| MDI | Diphenylmethandiisocyanat |
| HMDI | Hexamethylendiisocyanat |
| TMHMDI | Trimethylhexamethylendiisocyanat |
| TT | Dimeres Toluylendiisocyanat (Bayer) |
| ODI | Octadecylmonoisocyanat |
| MEHA | Mono-2-ethylhexylamin |
| DOLA | Diethanolamin |
| DMAPA | N,N-Dimethylaminopropylamin |
| DEAPA | N,N-Diethylaminopropylamin |

In den Beispielen werden für die Bestimmung des NCO-Gehaltes bzw. des Oxirangehalts folgende Methoden verwendet:

NCO-Wert: Ca. 0,5 - 4 g Harz, entsprechend dem zu erwartenden NCO-Wert, werden in 30 ml Diglykoldimethylether gelöst, mit 10 ml Kappelmeyerreagenz versetzt und 1 Minute homogenisiert. Nach Zugabe von 3 Tropfen Bromphenolblauindikatorlösung wird mit 0,5 n wäßriger HCl von blau nach gelb titriert (Wert A). Parallel wird ein Blindwert inklusive aller Reagenzien, aber ohne Harzeinwaage, durchgeführt (Wert B).

$$\text{NCO-Wert (\%)} = \frac{B - A}{\text{Einwaage (g)}} \times 2{,}1$$

| | |
|---|---|
| Kappelmeyerreagenz: | 64,6 g Diisobutylamin purum (Fluka 38160)<br>864 g Diglykoldimethylether |

Kalkulation der Harzeinwaage:

| Einwaage (g) | erwarteter NCO-Wert |
|---|---|
| 0,5 - 1,0 | 10 - 15 % |
| 2 - 4 | unter 1 % |

EPA-Wert: Methode zur Bestimmung des Oxirangruppengehaltes. Bei dieser Methode werden auch gegebenenfalls anwesende Aminogruppen in Milliäquivalenten pro Gramm der Probe erfaßt.

0,2 - 0,4 g Harz werden genau (auf Milligramm) gewogen und in 5 Tropfen Methoxypropanol geschmolzen. Nach Abkühlen werden 25 ml einer Mischung aus Dichlormethan und Eisessig (4:1 Volumsteile) zugegeben und das Harz unter leichtem Erwärmen gelöst. Dann werden bei Zimmertemperatur 0,5 g Tetrabutylammoniumjodid und 3 Tropfen Kristallviolett-Lösung zugegeben. Man titriert mit 0,1 n Perchlorsäure-Lösung in Eisessig von blau-violett nach gras-grün (kein Blauton). Ein Blindwert (ohne Harz) wird in gleicher Weise bestimmt:

$$\text{EPA-Wert} = \frac{(A - B) \times 0{,}1 \times F}{\text{Einwaage (g)}}$$

A = ml 0,1 n Perchlorsäure für Probe
B = ml 0,1 n Perchlorsäure für Blindwert
F = Faktor der 0,1 n Perchlorsäure-Lösung

Bestimmung des Faktors (F) der 0,1 n-Perchlorsäure:

In einer ERLENMEYER-Flasche werden ca. 200 mg Kaliumhydrogenphthalat (pro analysi) auf 0,1 mg genau eingewogen. Nach Zugabe von 30 ml Eisessig und 3 Tropfen Kristallviolett-Lösung wird mit der ca. 0,1 n Perchlorsäure-Lösung von blau-violett nach gras-grün titriert.

$$F = \frac{\text{Einwaage Kaliumhydrogenphthalat}}{\text{Verbrauch x 20,422}}$$

Das Epoxidäquivalentgewicht (EEW) in g Festharz, d. h. die Menge des Reaktionsproduktes (in g Festharz), die eine Epoxidgruppe enthält, wird folgendermaßen aus dem EPA-Wert berechnet:

$$\text{Epoxidäquivalentgewicht (g Festharz)} = \frac{\text{FK . 10}}{\text{EPA}}$$

<u>Herstellung der erfindungsgemäß eingesetzten Epoxidharzkomponente (Ab)</u>.

Die eingesetzten Epoxidverbindungen werden vor der Reaktion mit der Isocyanatkomponente durch azeotrope Destillation, vorzugsweise mit Xylol oder Toluol als Schleppmittel, von Wasserspuren befreit. Anschließend wird das Schleppmittel durch Vakuumdestillation entfernt und die Epoxidverbindung mit der zum Erreichen der Reaktionsverdünnung notwendigen Menge Diglykoldimethylether verdünnt. Diese mit der angegebenen Menge Katalysator versetzte Lösung wird unter Rühren auf die Reaktionstemperatur erhitzt. Es wird die Isocyanat-Komponente innerhalb von 2 Stunden zugegeben und bei der angegebenen Temperatur bis zum Erreichen des vollständigen Umsatzes der Isocyanatgruppe, d. h. auf einen NCO-Gehalt von unter 0,1 %, reagiert. Die Ausgangsstoffe, Reaktionsbedingungen und Kennzahlen der Zwischenprodukte sind in der Tab. 1 zusammengefaßt.

Tabelle 1

| Komponente | Gewichts-Tle (Mole) Isocyanat | Gew.Tle (Mole) Epoxid | Mol-% Li Br | Reaktions-Temperatur | Reaktionszeit | Lösung (%ig in DGDME) | Epoxidäquivalent | Festharzgehalt (%) |
|---|---|---|---|---|---|---|---|---|
| (Ab)1 | 174 TDI (1,0) | 760 EEW 190 (2,0) | 2,5 | 110°C | 4 | 80 | 450 ± 20 | 70 |
| (Ab)2 | 222 IPDI (1,0) | 1280 EEW 320 (2,0) | 5,0 | 160°C | 6 | 80 | 780 ± 20 | 80 |
| (Ab)3 | 254 MDI (1,0) | 1400 EEW 350 (2,0) | 1,0 | 110°C | 4 | 70 | 830 ± 30 | 60 |
| (Ab)4 | 168 HMDI (1,0) | 760 EEW 190 (2,0) | 3,0 | 130°C | 6 | 65 | 460 ± 20 | 60 |
| (Ab)5 | 210 TMHMDI (1,0) | 1400 EEW 350 (2,0) | 5,0 | 160°C | 10 | 65 | 800 ± 30 | 60 |
| (Ab)6 | 348 TT (1,0) | 760 EEW 190 (2,0) | 1,0 | 160°C | 6 | 60 | 730 ± 40 | 60 |
| (Ab)7 | 174 TDI (1,0) | 250 CE (1,0)<br>400 EEW 200 (1,0) | 2,5 | 160°C | 10 | 80 | 410 ± 20 | 70 |
| (Ab)8 | 174 TDI (1,0) | 1400 EEW 350 (2,0) | 2,5 | 130°C | 6 | 80 | 790 ± 30 | 80 |
| (Ab)9 | 295 ODI (1,0) | 380 EEW 190 (1,0) | 5,0 | 160°C | 4 | 70 | 690 ± 30 | 70 |

Herstellung der erfindungsgemäß eingesetzten Komponenten (Bd)

Komponente (Bd)1: Zu einer Lösung aus 103 g (1 Mol) Diethylentriamin und 170 g Methoxypropanol werden bei 60 °C innerhalb von 2 Stunden 577 g (3,1 Mol) 2-Ethylhexylglycidylether zugegeben und bis zu einem EPA-Wert (siehe vorne) von 3,70 und einem Brechungsindex n20/d von 1,4600 reagiert. Anschließend wird bei 60 °C innerhalb von 2 Stunden eine Mischung aus 190 g (1 Epoxidäquivalent) eines Bisphenol A-Epoxidharzes (EEW 190) und 49 g Methoxypropanol zugegeben und die Reaktion bis zu einem EPA-Wert von 2,70 und einem Brechungsindex von 1,4790 weitergeführt. Eine Losung aus 100 g des

80%igen Reaktionsproduktes und 30 g Methoxypropanol weist eine Viskosität (DIN 53211/20 °C) von 60 - 80 Sekunden auf.

Komponente (Bd) 2: Zu 103 g (1 Mol) Diethylentriamin und 170 g Methoxypropanol werden innerhalb von 2 Stunden bei 60 °C 577 g (3,1 Mol) 2-Ethylhexylglycidylether zugegeben und bis zu einem EPA-Wert von 3,53 bei dieser Temperatur reagiert. Eine Lösung des 80%igen Harzes weist einen Brechungsindex n20/d von 1,4580 auf.

Beispiele 1 bis 9:

Gemäß den in der Tabelle 2 zusammengefaßten Angaben werden die Bindemittel in folgender Weise hergestellt:
In einem geeigneten Reaktionsgefäß werden in einer ersten Reaktionsstufe die Epoxidharzkomponenten (Aa) und (Ab) in Methoxypropanol bzw. Ethoxypropanol gelöst und bei 60 °C mit den Aminkomponenten (BA), (Bb) und (Bd) bis zum Erreichen des angegebenen EPA-Wertes 1 reagiert.

Anschließend wird ebenfalls bei 60 °C mit der Aminkomponente (Bc) umgesetzt und die Reaktion nach Erhöhen der Temperatur auf 120 °C bei Erreichen des angeführten EPA-Wertes 2 beendet.

Die erhaltenen Reaktionsprodukte werden durch ihren Festharzgehalt, die Viskosität und die Molekulargewichtsverteilung (GPC) charakterisiert.

(X) Mengenangabe in Gewichtsteilen, in Klammern sind die Äquivalente Oxiran bzw. NH angegeben, die bei der Synthese in Reaktion treten.

(XX) Die Zusammensetzung der Meßlösung ist als (Gramm der Harzlösung + Gramm Lösemittel) angegeben.

* EPA-Wert 1 : Milliäquivalente Oxiran- und basische Stickstoffgruppen pro g Harzlösung

** EPA-Wert 2: Milliäquivalente basische Stickstoffgruppen pro g Harzlösung

$$\text{Aminzahl in mg KOH/g} = \frac{\text{EPA-Wert 2} \times 560}{\text{Festkörpergehalt in \%}}$$

*** Die Gelpermeationsanalyse wurde mit Tetrahydrofuran als Elutionsmittel auf einer Anlage, bestehend aus einer LKB-Pumpe 2150, 3 Ultrastyragelsäulen (Waters) mit 500, 1000 und 10.000 Å Ausschlußvolumen und einem Differentialrefraktometer 12401 (Waters), im Vergleich zu Polystyrol-Eichstandards durchgeführt.

Vernetzungskomponente VK 1

In einem Reaktionsgefäß mit einer für das Azeotropverfahren geeigneten Einrichtung und einer Glockenbodenkolonne zur Abtrennung der bei der partiellen Umesterung gebildeten Alkoholkomponente werden zu einer Mischung aus 160 g (1 Mol) Malonsäurediethylester, 0,34 g (0,004 Mol) Piperidin und 0,22 g (0,004 Mol) Ameisensäure 85 % bei 80 °C 29,7 g (0,9 Mol) Paraformaldehyd 91 % portionsweise so zugegeben, daß bei Einsetzen der exothermen Reaktion eine Temperatur von 95 °C nicht überschritten wird. Das Reaktionsgemisch wird bei 95 °C gerührt, bis der Paraformaldehyd vollständig gelöst ist. Die Temperatur wird unter einsetzender Wasserabspaltung innerhalb von 2 Stunden auf 110 °C erhöht. Nach Erreichen von 110 °C werden mit Spezialbenzin (Siedebereich 80 - 120 °C) als Schleppmittel insgesamt 9 g Wasser abdestilliert. Unter Anlegen von Vakuum wird anschließend das eingesetzte Schleppmittel entfernt.

Nach Zugabe von 22,8 g (0,3 Mol) Propylenglykol-1,2 wird der Ansatz bis zum Destillationsbeginn (140 - 150 °C) erhitzt. Bei steigender Temperatur werden 27 Tle (0,6 Mol) Ethanol abdestilliert. Das erhaltene Produkt weist einen Festharzgehalt (120 °C, 30 Minuten) von ca. 92 %, eine OH-zahl unter 5 mg KOH/g, eine Grenzviskositätszahl von ca. 5,2 ml/g (20 °C, Dimethylformamid) und einen Brechungsindex n20/d von 1,4670 auf.

Vernetzungskomponente VK 2

Entsprechend dem bei VK 1 beschriebenem Verfahren werden eine Mischung aus 134,4 g (0,84 Mol) Malonsäurediethylester, 0,286 g (0,0034 Mol) Piperidin und 0,185 g (0,0034 Mol) Ameisensäure 85 % mit 13,86 g (0,42 Mol) Paraformaldehyd 91%ig umgesetzt, wobei insgesamt 9,24 g (0,51 Mol) Wasser

abdestilliert werden. Das Produkt weist einen Festkörpergehalt von 78 % (120 °C, 30 Minuten) auf. Der Brechungsindex ergibt einen Wert von n 20/d = 1,437.

Anschließend werden 134 g (1 Mol) Trimethyolpropan zugegeben und bis zum Destillationsbeginn (140 - 150 °C) erhitzt. Bei steigender Temperatur werden 23 g (0,5 Mol) Ethanol abdestilliert. Nach Erreichen der Destillatmenge wird mit 263 g Diethylenglykoldimethylether (DGDME) verdünnt und auf 30 °C gekühlt. Bei 30 °C werden innerhalb von 6 Stunden 800 g (2,5 Mol bzw. NCO-Äquivalente) eines Reaktionsproduktes aus 2,5 Mol Toluylendiisocyanat (handelsübliches Isomerengemisch) und 2,5 Mol Ethylenglykolmonohexylether zugegeben. In weiteren 4 Stunden wird die Temperatur auf 100 °C erhöht und bei dieser Temperatur bis zu einem NCO-Gehalt unter 0,01 Milliäquivalente pro g Probe reagiert.

Das erhaltene Produkt mit einem Festharzgehalt von 80 % (120 °C, 30 Minuten) weist einen Brechungsindex n 20/d von 1,507 und eine Viskosität (10 g Harzlösung + 4 g DGDME) von E - F (Gardner-Holdt) auf.

Vernetzungskomponente VK 3

Umsetzungsprodukt von 134 g (1 Mol) Trimethylolpropan mit 851 g (2,8 Mol) eines mit 2-Ethylhexanol halbblockierten TDI in 70%iger DGDME-Lösung.

Vergleichsbeispiel 1 (Produkt gemäß EP-A2- 0355654)

In einem geeigneten Reaktionsgefäß werden 772 g MOD 3*)(entsprechend 0,6 NH-Äquivalenten), 570 g (3,0 Epoxidäquivalente) eines Bisphenol A-Diepoxidharzes (EEW 190), 77,4 g (1,2 NH-Äquivalente) 2-Ethylhexylamin und 162 g Methoxypropanol bei 60 °C in einer ersten Reaktionsstufe bis zum vollständigen Umsatz der NH-Funktionalität, d. h. bis zu einem EPA-Wert von 1,99 reagiert. Anschließend werden 1330 g (2,1 Epoxidäquivalente) einer 75%igen Lösung in Methoxypropanol eines Bisphenol A-Diepoxidharzes (EEW 475) und 189 g (1,8 NH-Äquivalente) Diethanolamin zugegeben und wieder bis zum Umsatz der NH-Funktionalität, d. h. bis zu einem EPA-Wert von 1,63 reagiert. In einer 3. Reaktionsstufe werden die restlichen Oxirangruppen mit 78 g (1,2 NH-Äquivalente) N,N-Diethylaminopropylamin 2 Stunden bei 60 °C, sowie eine weitere Stunde bei 90 °C und 3 weitere Stunden bei 120 °C bis zu einem EPA-Wert von 1,49 umgesetzt, und mit Methoxypropanol auf einen Festharzgehalt von 65 Gew.-% verdünnt. Die Viskosität (DIN 53211/20 °C) einer mit Methoxypropanol auf einen Festharzgehalt von 46 Gew.-% verdünnten Harzlösung beträgt 160 Sekunden. Die aus Gelchromatogrammen ermittelten Gewichts- bzw. Zahlenmittel betragen: Mw = 8452 Mn = 1431. bis zu einem EPA-Wert von 2,33 weitergeführt.

Eine Lösung von 100 g des 80%igen Harzes und 30 g Methoxypropanol weist eine Viskosität (DIN 53211/20 °C) von 60 - 70 Sekunden auf.

80 Gew.-Teile (Festharz) des als Vergleichsbeispiel 1 angeführten Produkts werden mit 20 Gew.-Teilen (Festharz) der Vernetzungskomponente VK2 30 Minuten bei 60 °C homogenisiert und nach Neutralisation mit 35 mMol Ameisensäure bezogen auf 100 g Festharz in angegebener Weise zum Lack weiterverarbeitet.

Vergleichsbeispiel 2 (Produkt gemäß AT-PS 381 115)

In einem geeigneten Reaktionsgefäß werden 1627 g (3,43 Äquivalente) Epoxidharz EEW 475 mit 226 g (0,24 Äquivalente) carboxyfunktionellen Modifikator [1]in Gegenwart des Lösemittels Methoxypropanol bei einem Festharzgehalt von 85 % bei 110 °C bis zu einer Säurezahl von weniger als 0,5 mg KOH/g umgesetzt. Nach Verdünnen des Ansatzes mit weiterem Lösemittel auf einen Festkörpergehalt von 70 % erfolgt bei 60 °C innerhalb von 2 Stunden die Zugabe von 94,5 g (0,9 NH-Äquivalente) Diethanolamin, 67,5 g (0,9 NH-Äquivalente) N-Methylethanolamin und 78 g (1,2 NH-Äquivalente) N,N-Diethylaminopropylamin. Anschließend wird bei 90 °C 4 Stunden reagiert, 238 g (1,19 Äquivalente) Epoxidharz EEW 200 zugegeben und bei 120 °C 6 Stunden bis zum Verbrauch aller Glycidylgruppen reagiert. Das Reaktionsprodukt wird mit

*)MOD 3: Zu 103 g (1 Mol) Diethylentriamin und 170 g Methoxypropanol werden innerhalb von 2 Stunden bei 60°C 577 g (3,1 Mol) 2-Ethylhexylglycidylether zugegeben und bis zu einem EPA-Wert von 3,53 bei dieser Temperatur reagiert. Anschließend wird eine Mischung aus 87 g Methoxypropanol und 350 g (1 Epoxidäquivalent) eines Diepoxidharzes auf Basis eines polyoxypropylenglykolmodifizierten Bisphenol A (BPP 350, Sanyo Chemical) innerhalb von 2 Stunden bei 60°C zugegeben und die Reaktion

[1] Carboxyfunktioneller Modifikator:
Polyester aus 3 Mol Trimethylolpropan, 2 Mol Adipinsäure, 1 Mol Isononansäure und 1 Mol Tetrahydrophthalsäureanhydrid (Säurezahl: 65 mg KOH/g, Carboxyläquivalentgewicht 942 g).

MP auf einen Festkörpergehalt von 65 % eingestellt.

Für das Vergleichsbeisplel 2 werden 70 Tle (Festharz) des Reaktionsproduktes mit 30 Tlen (Festharz) der Vernetzungskomponente 1 eine Stunde bei 120 °C reagiert.

Nach der Neutralisation mit 40 mMol Ameisensäure bezogen auf 100 g Festharz wird ein Lack in der angegebenen Weise hergestellt.

Vergleichsbeispiel 3 (Produkt gemäß EP-A2-0218812)

In einem geeigneten Reaktionsgefäß werden 228 Tle Bisphenol A (1 Mol) mit 260 Tlen Diethylaminopropylamin (2 Mol) und 66 Tlen Paraformaldehyd 91 % (2 Mol) in Gegenwart von 131 Tlen Toluol als Azeotropschleppmittel bei 90 bis 130 °C bis zur Abtrennung von 42 Tlen Reaktionswasser umgesetzt. Nach Zugabe von 152 Tlen Diethylenglykoldimethylether und Kühlen auf 30 °C werden innerhalb 45 Minuten 608 tle (2,0 Mol) eines mit 2-Ethylhexanol halbblockierten Toluylendiisocyanats zugegeben.

Sobald alle Isocyanatgruppen verbraucht sind, werden 1400 Tle dieser Lösung mit 500 Tlen (2 Mol) des Glycidylesters einer gesättigten tertiären $C_9$-$C_{11}$-Monocarbonsäure,welcher in 300 Tlen Diethylenglykoldimethylether gelöst wurde, versetzt und bei 95 bis 100 °C bis zu einem Epoxidwert von 0 umgesetzt. Nach Kühlen auf 80 °C werden im Verlauf von 30 Minuten 210 Tle (1 Mol) Trimethylhexamethylendiisocyanat, gelöst in 53 Tlen Diethylenglykoldimethylether zugegeben. Nach Überprüfung der Vollständigkeit der Reaktion, wird das Produkt mit 0,6 Tlen/100 g Festharz (berechnet als Metall) Dibutylzinndilaurat (oder eines anderen Zinnkatalysators) versetzt und durch Zugabe von 35 Millimol Ameisensäure/100 g Festharz in die wasserverdünnbare Form gebracht.

Prüfung der Produkte gemäß Beispiel 1 - 9 in kathodisch abscheidbaren Lacken

Die erfindungsgemäß hergestellten Produkte werden in den in der Tab. 3 angegebenen Verhältnissen mit einer Vernetzungskomponente in 60%iger Lösung in Methoxypropanol bzw. Ethoxypropanol entsprechend den angegebenen Bedingungen vorkondensiert. Aus diesen Bindemittel-Lösungen werden entsprechend der Formulierung

100 Tle Bindemittel (Festharz)
36,5 Tle Titandioxid
3 Tle Bleisilikatpigment
0,5 Tle Farbruß

in üblicher Weise Lacke hergestellt, welche nach Protonisierung mit der in Tabelle 3 angegebenen Säuremenge mit deionisiertem Wasser auf einen Festkörpergehalt von 18 % verdünnt werden.

Als Katalysator für die Härtung wurde Blei in Form des Bleioktoates in einer Menge von 1 Tl Blei (Metall) auf 100 Tle Bindemittel-Festharz eingesetzt.

Für das Vergleichsbeispiel 3 wurde Zinn in Form von Dibutylzinndilaurat in einer Menge von 0,6 Tlen/100 g Festharz (berechnet als Metall) eingesetzt.

Die Abscheidung erfolgt auf zinkphosphatierte Stahlbleche bei einer Badtemperatur von 28 °C und einer Beschichtungszeit von 2 Minuten. Die derart beschichteten Bleche wurden anschließend 30 Minuten bei 160 °C eingebrannt. Die Prüfergebnisse sind in Tabelle 4 zusammengefaßt.

Die Ergebnisse der erfindungsgemäßen Produkte hinsichtlich eines ausgezeichneten Kantenkorrosionsschutzes werden besonders deutlich im direkten Vergleich mit den bereits sehr guten Eigenschaftsbildern Vergleichsprodukte aus den Patentanmeldungen EP-A2-0355654, AT-PS 381.115 und EP-A2-0218812, d. h. ähnlich aufgebauter Produkte ohne Oxazolidonstruktureinheiten.

Tabelle 2

| Beispiel<br>Komponente (X) | | 1 | 2 | 3 | 4 | 5 |
|---|---|---|---|---|---|---|
| (Aa) | EEW 475 (75 %) | 601,3 (0,95) | 443 (0,7) | 697 (1,1) | 570 (0,9) | 1824 (2,88) |
| | EEW 350 | -- | 525 (1,5) | -- | -- | -- |
| | EEW 190 | -- | 285 (1,5) | 570 (3,0) | 570 (3,0) | 315 (1,66) |
| (Ab) | | 129 (0.20)<br>(Ab)1(70 %) | 683 (0,70)<br>(Ab)2(80 %) | 415 (0,3)<br>(Ab)3(60%) | 383 (0,5)<br>(Ab)4(60%) | 253 (0,19)<br>(Ab)5(60%) |
| (Ba) | | -- | 32,3 (0,5)<br>MEHA | 32,3 (0,5)<br>MEHA | 48,4 (0,75)<br>MEHA | 53,5 (0,415)<br>MEHA |
| (Bb) | | 45,2 (0,43)<br>DOLA | 189 (1,8)<br>DOLA | 147 (1,4)<br>DOLA | 126 (1,2)<br>DOLA | 189 (1,8)<br>DOLA |
| (Bc) | | 119 (0.28)<br>(Bd)2(80%) | 652 (0,6)<br>(Bd)1(80%) | 652 (0,6)<br>(Bd)1(80%) | 380 (0,35)<br>(Bd)1(80%) | 652 (0.6)<br>(Bd)1(80%) |
| LÖSEMITTEL | | 140.2 MP | 974 MP | 960 MP | 410 MP | 460 MP |
| * EPA-WERT 1 | | 1,30 | 1,42 | 1,54 | 1,90 | 1,52 |
| (Bc) | | 16,3 (0,32)<br>DMAPA | 78 (1,2)<br>DEAPA | 104 (1.6)<br>DEAPA | 117 (1,8)<br>DEAPA | 78 (1,2)<br>DEAPA |
| ** EPA-WERT 2 | | 1,14 | 1,30 | 1,41 | 1,70 | 1,30 |
| KENNWERTE | | | | | | |
| FESTKÖRPERGEHALT, % | | 65 | 65 | 60 | 70 | 70 |
| VISKOSITÄT, DIN 53211/20°C (XX) | MESSLÖSUNG | 100 + 50 MP | 100 + 40 MP | 110 + 30 MP | 93 + 47 MP | 81 + 59 EP |
| | AUSLAUFZEIT | 230 s | 80 s | 250 s | 130 s | 110 s |
| *** GPC, Ultrastyragel | | | | | | |
| Gewichtsmittel | Mw | 8976 | 2508 | 9974 | 5624 | 5419 |
| Zahlenmittel | Mn | 2295 | 1542 | 2566 | 1571 | 1776 |

Tabelle 2 Fortsetzung

| Beispiel Komponente (X) | | 6 | | 7 | | 8 | | 9 | |
|---|---|---|---|---|---|---|---|---|---|
| (Aa) | EEW 475(75%) | 2150 | (3,39) | 443 | (0,7) | 1892 | (2,99) | 1963 | (3,1) |
| | EEW 350 | 147 | (0,42) | 525 | (1,5) | 291 | (0,83) | -- | |
| | EEW 190 | -- | | 285 | (1,5) | -- | | -- | |
| (Ab) | | 110 | (0,09) | 410 | (0,7) | 178 | (0,18) | 394 | (0,4) |
| | | (Ab)6(60%) | | (Ab)7(70%) | | (Ab)8(80%) | | (Ab)9(70%) | |
| (Ba) | | -- | | 38,7 | (0,6) | -- | | -- | |
| | | | | MEHA | | -- | | -- | |
| (Bb) | | 158 | (1,5) | 210 | (2,0) | 168 | (1,6) | 116 | (1,1) |
| | | DOLA | | DOLA | | DOLA | | DOLA | |
| (Bd) | | 652 | (0,6) | 326 | (0,3) | 761 | (0,7) | 652 | (0,6) |
| | | (Bd)1(80%) | | (Bd)1(80%) | | (Bd)1(80%) | | (Bd)1(80%) | |
| LÖSEMITTEL | | 1023 | EP | 788 | EP | 1139 | EP | 613 | EP |
| * EPA-WERT 1 | | 1,20 | | 1,85 | | 1,15 | | 1,26 | |
| (Bc) | | 97,5 | (1,5) | 78 | (1,2) | 104 | (1,6) | 117 | (1,8) |
| | | DEAPA | | DEAPA | | DEAPA | | DEAPA | |
| ** EPA-WERT 2 | | 1,11 | | 1,32 | | 1,13 | | 1,24 | |
| KENNWERTE | | | | | | | | | |
| FESTKÖRPERGEHALT, % | | 60 | | 65 | | 60 | | 65 | |
| VISKOSITÄT, DIN 53211/20°C | MESSLÖSUNG | 95 + 45 EP | | 108 + 32 MP | | 95 + 45 EP | | 90 + 60 EP | |
| (XX) | AUSLAUFZEIT | 145 s | | 95 s | | 100 s | | 122 s | |
| *** GPC, Ultrastyragel Gewichtsmittel Mw | | 6873 | | 3768 | | 5811 | | 10205 | |
| Zahlenmittel Mn | | 2049 | | 1645 | | 1824 | | 2309 | |

Tabelle 3

| Bindemittelkombination | Vernetzungskomponente VK/(Tle Festharz) | Tle Festharz ex Beispiel | Reaktionsbedingungen Basisharz/VK | Neutralisationsmittelbedarf in mM Ameisensäure pro 100 g Festharz |
|---|---|---|---|---|
| 1 | 20 Tle VK 1 | 80 Tle Bsp. 1 | 1 h 110 °C | 35 |
| 2 | 30 Tle VK 2 | 70 Tle Bsp. 2 | 1 h 120 °C | 35 |
| 3 | 30 Tle VK 2 | 70 Tle Bsp. 3 | 1 h 60 °C | 40 |
| 4 | 25 Tle VK 1 | 75 Tle Bsp. 4 | 2 h 110 °C | 35 |
| 5 | 25 Tle VK 1 | 75 Tle Bsp. 5 | 2 h 100 °C | 35 |
| 6 | 20 Tle VK 1 | 80 Tle Bsp. 6 | 1 h 60 °C | 40 |
| 7 | 25 Tle VK 2 | 75 Tle Bsp. 7 | 1 h 60 °C | 45 |
| 8 | 30 Tle VK 2 | 70 Tle Bsp. 8 | 1 h 90 °C | 40 |
| 9 | 20 Tle VK 2 | 80 Tle Bsp. 9 | 2 h 120 °C | 45 |
| 10 | 25 Tle VK 3 | 75 Tle Bsp. 3 | 1 h 60 °C | 45 |
| 11 | 30 Tle VK 3 | 70 Tle Bsp. 6 | 1 h 60 °C | 40 |

Tabelle 4

| Lack aus Bindemittel | Abscheidung Volt | Schichtstärke µm | Rauhtiefe Roughness Ra [1] in Mikrometer | Salzsprühtest ASTM-B-117--64 in Stunden[2] | Kantenbeurteilung nach 960" Salzsprühtest[3] |
|---|---|---|---|---|---|
| 1 | 390 | 15 | 0,35 | 1000 | 0 |
| 2 | 300 | 28 | 0,28 | 960 | 1 |
| 3 | 330 | 26 | 0,20 | 1000 | 0 |
| 4 | 300 | 29 | 0,30 | 960 | 0 |
| 5 | 300 | 22 | 0,28 | 1000 | 0 |
| 6 | 360 | 17 | 0,35 | 1000 | 0 |
| 7 | 300 | 32 | 0,23 | 960 | 1 |
| 8 | 390 | 20 | 0,22 | 1000 | 0 |
| 9 | 300 | 29 | 0,20 | 960 | 1 |
| 10 | 300 | 28 | 0,22 | 1000 | 0 |
| 11 | 390 | 22 | 0,24 | 1000 | 0 |
| Vgl.Bsp. 1 | 360 | 30 | 0,30 | 1000 | 2 |
| Vgl.Bsp. 2 | 330 | 26 | 0,29 | 960 | 2 - 3 |
| Vgl.Bsp. 3 | 330 | 16 | 0,37 | 1000 | 0 - 1 |

[1] Die Roughness Werte wurden mit dem Gerät "Surftest 201" der Firma Mitutoyo gemessen.
[2] Bis zur angegebenen Stundenzahl ist der Angriff am Kreuzschnitt unter 2 mm.
[3] Für die Bewertung der Kantenkorrosion wurde eine Bewertung entsprechend der nachfolgenden Wertskala durchgeführt:

0 = kein Angriff
1 = vereinzelte Bläschen erkennbar
2 = entlang der Kante deutlicher Korrosionsangriff
3 = starke Bläschenbildung über die gesamte Kantenlänge

**Patentansprüche**

1. Verfahren zur Herstellung von kationischen Lackbindemitteln auf der Basis von modifizierten Epoxidharz-Amin-Addukten, dadurch gekennzeichnet, daß man

(A) 60 bis 80 Gew.-%, vorzugsweise 65 bis 75 Gew.-%, einer Epoxidharzkomponente, bestehend aus

(Aa) 60 bis 98 Gew.-%, vorzugsweise 80 bis 97 Gew.%, mindestens eines aromatischen und/oder aliphatischen Diepoxidharzes mit einem Epoxidäquivalentgewicht zwischen 190 und 500,

und

(Ab) 2 bis 40 Gew.-%, vorzugsweise 3 bis 20 Gew.-%, mindestens einer durch N-substituierte Mono- und/oder Bis-2-oxazolidon-Gruppierungen, wie sie durch Reaktion von Glycidylgruppen mit Isocyanatgruppen erhalten werden, modifizierten Epoxidverbindung der allgemeinen Formel

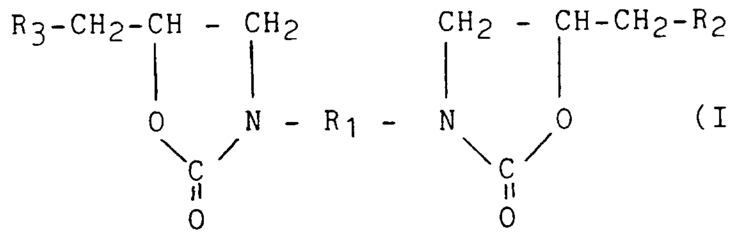

(I)

oder

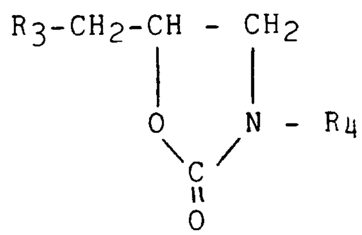

(II)

wobei

$R_1$ den verbleibenden Rest eines (cyclo)aliphatischen oder eines aromatischen Diisocyanats,

$R_2$ den verbleibenden Rest eines aliphatischen Monoglycidylethers oder eines aliphatischen Monoglycidylesters oder einen Rest $R_3$,

$R_3$ den verbleibenden Rest eines (aromatisch-) aliphatischen oder aromatischen Diglycidylethers und

$R_4$ den verbleibenden Rest eines (cyclo)aliphatischen oder eines aromatischen Monoisocyanats darstellt,

mit

(B) 20 bis 40 Gew.-%, vorzugsweise 25 bis 35 Gew.-%, einer Aminkomponente, bestehend aus

(Ba) 0 bis 20 Aminäquivalent-%, vorzugsweise 0 bis 15 Aminäquivalent-%, mindestens eines primären Alkylamins und/oder Alkanolamins,

(Bb) 25 bis 55 Aminäquivalent-%, vorzugsweise 35 bis 50 Aminäquivalent-%, mindestens eines sekundären Alkylamins und/oder Alkanolamins,

(Bc) 20 bis 50 Aminäquivalent-%, vorzugsweise 25 bis 45 Aminäquivalent-%, mindestens eines prim.-tert. Alkyldiamins, und

(Bd) 5 bis 25 Aminäquivalent-%, vorzugsweise 10 bis 20 Aminäquivalent-%, einer disekundären Aminverbindung aus 2 Mol einer als Reaktionsprodukt von diprimären Di- oder Polyaminen mit aliphatischen Monoglycidyl- und/oder Monoepoxidverbindungen resultierenden Verbindung mit einem Mol einer Diepoxidverbindung,

wobei die Summe der Prozentzahlen der Komponenten A und B bzw. der Komponenten (Aa) und (Ab) bzw. der Komponenten (Ba), (Bb), (Bc) und (Bd) jeweils 100 ergeben müssen, zu einem epoxidgruppenfreien Addukt mit einem Molekulargewicht von 2000 - 18.000 (Gewichtsmittel), einer Glasübergangstemperatur zwischen +20 und +45°C und einer Basizität entsprechend einer Aminzahl von mind. 20 mg KOH/g umsetzt, mit der Maßgabe, daß die Epoxidharzkomponenten (Aa) und (Ab) mit den Aminkomponenten (Ba), (Bb), (Bc) und (Bd) bei 60 bis 80°C in 55-75%iger Anlösung in Glykolethern reagiert werden, wobei die Reaktion mit der Aminkomponente (Bc) vorzugsweise zuletzt durchgeführt wird, und daß man zur Vervollständigung der Reaktion die Reaktionstemperatur nach Ende aller Zugaben auf maximal 120°C erhöht.

2. Verfahren nach Anspruch 1, dadurch gekennzeichnet, daß man monofunktionelle Verbindungen der Formel (I) bzw. (II) zusammen mit difunktionellen Verbindungen der Formel (I) ($R_2 = R_3$) als Komponente (Ab) einsetzt.

3. Kationische Lackbindemittel, hergestellt nach den Ansprüchen 1 und 2.

4. Verwendung der nach den Ansprüchen 1 und 2 hergestellten kationischen Lackbindemitel in Kombination mit Vernetzungskomponenten in kathodisch abscheidbaren Elektrotauchlacken.

**Claims**

1. Process for the preparation of cationic binders for coatings based on modified epoxy resin-amine adducts, characterised in that

(A) 60 to 80 % by weight, preferably 65 to 75 % by weight, of an epoxy resin component consisting of

(Aa) 60 to 98 % by weight, preferably 80 to 97 % by weight, of at least one aromatic and/or aliphatic diepoxy resin having an epoxide equivalent weight of between 190 and 500,

and

(Ab) 2 to 40 % by weight, preferably 3 to 20 % by weight, of at least one epoxide compound which is modified by N-substituted mono- and/or bis-2-oxazolidone groupings, such as are obtained by reaction of glycidyl groups with isocyanate groups, and has the general formula

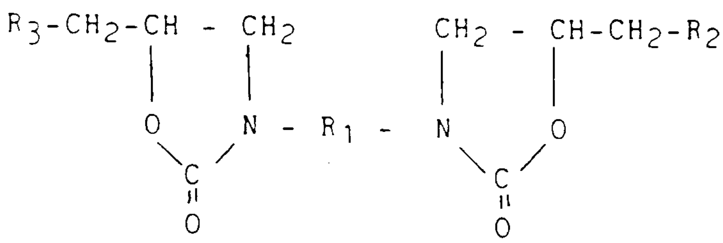

(I)

or

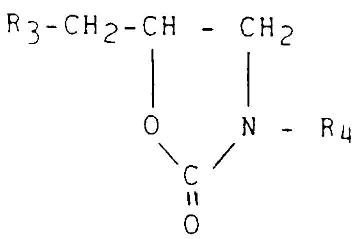

(II)

wherein

$R_1$ represents the remaining radical of a (cyclo)aliphatic or an aromatic diisocyanate,

$R_2$ represents the remaining radical of an aliphatic monoglycidyl ether or an aliphatic monoglycidyl ester or a radical $R_3$,

$R_3$ represents the remaining radical of an (aromatic)-aliphatic or aromatic diglycidyl ether and

$R_4$ represents the remaining radical of a (cyclo)aliphatic or an aromatic monoisocyanate,

are reacted with

(B) 20 to 40 % by weight, preferably 25 to 35 % by weight, of an amine component consisting of

(Ba) 0 to 20 % by amine equivalence, preferably 0 to 15 % by amine equivalence, of at least one primary alkylamine and/or alkanolamine,

(Bb) 25 to 55 % by amine equivalence, preferably 35 to 50 % by amine equivalence, of at least one secondary alkylamine and/or alkanolamine,

(Bc) 20 to 50 % by amine equivalence, preferably 25 to 45 % by amine equivalence, of at least one primary-tertiary alkyldiamine and

(Bd) 5 to 25 % by amine equivalence, preferably 10 to 20 % by amine equivalence, of a disecondary amine compound of 2 mol of a compound resulting as a reaction product of diprimary di- or polyamines with aliphatic monoglycidyl and/or monoepoxide compounds with one mol of a diepoxide compound,

wherein the totals of the percentage figures of components A and B or components (Aa) and (Ab) or components (Ba), (Bb), (Bc) and (Bd) must in each case give 100, to give an adduct which is free from epoxide groups and has a molecular weight of 2,000 - 18,000 (weight-average), a glass transition temperature of between +20 and +45 °C and a basicity corresponding to an amine number of at least 20 mg KOH/g, with the proviso that the epoxy resin components (Aa) and (Ab) are reacted with the amine components (Ba), (Bb), (Bc) and (Bd) at 60 to 80 °C in a 55-75 % strength partial solution in glycol ethers, the reaction with amine component (Bc) preferably being carried out last, and that after the end of all the additions, the reaction temperature is increased to a maximum of 120 °C to bring the reaction to completion.

**2.** Process according to Claim 1, characterised in that monofunctional compounds of the formula (I) or (II) are employed together with difunctional compounds of the formula (I) ($R_2 = R_3$) as component (Ab).

**3.** Cationic binders for coatings, prepared according to Claims 1 and 2.

**4.** Use of the cationic binders for coatings prepared according to Claims 1 and 2 in combination with cross-linking components in cathodic electrodeposition coatings.

## Revendications

**1.** Procédé de préparation de liants pour peintures cationiques à base de produits d'addition de résine époxyde-amine modifiés, caractérisé en ce que l'on fait réagir

A) 60 à 80% en poids, de préférence 65 à 75% en poids d'un composant à base de résine époxydique consistant

Aa) en 60 à 98% en poids, de préférence 80 à 97% en poids d'au moins une résine diépoxydique aromatique et/ou aliphatique avec un poids équivalent d'époxy entre 190 et 500, et

Ab) en 2 à 40% en poids, de préférence 3 à 20% en poids d'au moins un composé époxydique modifié par des groupements mono- et/ou bis-2-oxazolidone N-substitués, tels qu'ils sont obtenus par réaction de groupes glycidyles avec des isocyanates, répondant à la formule générale

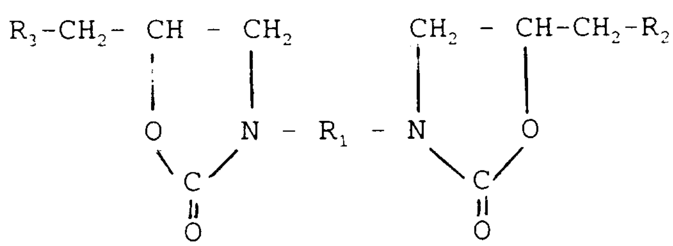

(I)

ou

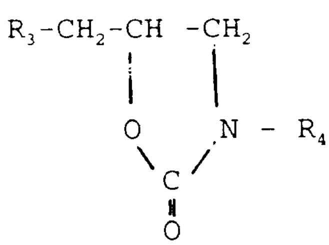

(II)

$R_1$ représentant le reste d'un diisocyanate (cyclo) aliphatique ou aromatique,
$R_2$ représentant le reste d'un monoéther glycidique aliphatique ou d'un monoester glycidique aliphatique ou un reste $R_3$,
$R_3$ représentant le reste d'un éther diglycidique (aromato)aliphatique ou aromatique et
$R_4$ représentant le reste d'un monoisocyanate (cyclo)aliphatique ou aromatique, avec

B) 20 à 40% en poids, de préférence 25 à 35% en poids d'un composant amine constitué par
Ba) 0 à 20% d'équivalent amine, de préférence 0 à 15% d'équivalent amine d'au moins une alkylamine et/ou une alcanolamine primaire,
Bb) 25 à 55% d'équivalent amine, de préférence 35 à 50% d'équivalent amine d'au moins une alkylamine et/ou une alcanolamine secondaire,
Bc) 20 à 50% d'équivalent amine, de préférence 25 à 45% d'équivalent amine d'au moins une alkyldiamine primaire-tertiaire et
Bd) 5 à 25% d'équivalent amine, de préférence 10 à 20% d'équivalent amine d'un composé amine disecondaire à partir de 2 moles d'un composé sous forme d'un produit réactionnel de di- ou polyamines diprimaires avec des composés monoglycidiques et/ou monoépoxydiques aliphatiques avec une mole d'un composé diépoxydique, les sommes des pourcentages des composants A et B, respectivt. des composants Aa) et Ab), respectivt. des composants Ba), Bb) Bc) et Bd) devant donner chaque fois 10O en vue d'obtenir un produit d'addition exempt de groupes époxy ayant un poids moléculaire de 2000-18000 (moyenne pondérale), une températre de transition vitreuse entre +20 et +45°C et une basicité correspondant à un indice d'amine d'au moins 20 mg de KOH/g, à la condition que l'on fasse réagir les composants à base de résine époxydique Aa) et Ab) entre 60 et 80°C avec les composants amine Ba), Bb), Bc) et Bd) en solution à 55-75% dans des éthers glycoliques, auquel cas la réaction avec le composant amine Bc) est de préférence réalisée en dernier lieu, et que, pour parfaire la réaction, on élève la température de réaction au maximum à 120°C après la fin de toutes les additions.

**2.** Procédé selon la revendication 1, caractérisé en ce qu'on met en oeuvre en tant que composant Ab) des composés monofonctionnels de formule (I) ou (II) conjointement avec des composés difonctionnels de for mule (I) ($R_2 = R_3$).

**3.** Liants pour peintures cationiques préparés selon les revendications 1 et 2.

**4.** Utilisation des liants pour peintures cationiques préparés selon les revendications 1 et 2 en association avec des composants de réticulation dans des peintures électrophorétiques se déposant à la cathode.